# EUROPÄISCHE PATENTSCHRIFT

(11) **EP 0 433 492 B1**
(45) Veröffentlichungstag und Bekanntmachung des Hinweises auf die Patenterteilung: **02.03.1994**
(21) Anmeldenummer: 89123788.5
(22) Anmeldetag: 22.12.1989
(51) Int. Cl.: G01S 7/52, G10K 11/34

(54) **Ultraschallgerät zur virtuellen Verkleinerung der Arrayteilung eines anschliessbaren Wandlerarrays**
Ultrasonic device for the virtual reduction of the array partition of a connectable transducer array
Dispositif ultrasonore pour la réduction virtuelle de la division arrangée d'un alignement de transducteur raccordé

(43) Veröffentlichungstag der Anmeldung: 26.06.1991
(73) Patentinhaber: SIEMENS AKTIENGESELLSCHAFT, 80333 München (DE)
(72) Erfinder: Hassler, Dietrich, Dr., D-8525 Uttenreuth (DE); Temme, Günter, Dipl.-Phys., D-8521 Spardorf (DE)

(56) Entgegenhaltungen:
- EP-A- 0 041 185
- DE-A- 3 634 504
- FR-A- 2 467 413

## Beschreibung

Die Erfindung betrifft ein Ultraschallgerät mit einer ersten Gruppe von Sende- und Empfangskanälen, die je einem Elementarwandler in der aktiven Apertur eines anschließbaren Wandlerarrays zugeordnet sind, wobei der von einem Sendekanal erzeugte zentrale Sendeort und der von einem Empfangskanal abgefragte zentrale Empfangsort auf den zugeordneten Elementarwandler liegt.

Ein Ultraschallgerät der eingangs genannten Art ist in der US-PS 4 409 982 beschrieben. Dort sind Sende- und Empfangskanäle vorgesehen, die je einem Elementarwandler in der aktiven Apertur eines anschließbaren Wandlerarrays zugeordnet sind. Der jeweilige zentrale Sende- und Empfangsort liegt auf dem zugeordneten Elementarwandler. Dazu ist jeweils ein Wandler über einen Analog-Multiplexer mit einem Sende- bzw. Empfangskanal verbunden. Der zentrale Sendeort ist identisch mit dem Ursprung der Hauptenergiestrahlrichtung eines Elementarwandlers, während der zentrale Empfangsort mit dem Ursprung der Hauptempfindlichkeitsrichtung eines Elementarwandlers identisch ist. Die Arrayteilung, also der Abstand der Elementarwandler auf dem Wandlerarray, gibt somit den Abstand der zentralen Sende- und Empfangsorte vor.

Simulationen und Messungen an handelsüblichen Wandlerarrys, insbesondere an "curved-arrays" mit in Abstrahlrichtung konvex gekrümmter Oberfläche, haben gezeigt, daß die Dynamik der Punktbildfunktion auf ca. 40 dB bis 50 dB beschränkt ist. Dies liegt in erster Linie an der relativ groben Teilung des Arrays, z. B. 0,75 mm Rasterweite (entspricht dem Abstand der zentralen Sende- und Empfangsorte) bei 3,5 MHz und 70 mm Krümmungsradius. Diese Dynamikbegrenzung setzt der Fähigkeit von Ultraschallgeräten zur Erkennung geringer Kontrastunterschiede eine Grenze. Es ist jedoch wünschenswert, die Arrayteilung so fein wie möglich zu machen. Denn es gilt, je feinteiliger das Wandlerarray ist, desto besser läßt sich ein elektronischer Schwenk oder eine elektronische Fokussierung durchführen. Eine feine Arrayteilung ist die Grundlage für eine Bilddarstellung mit hoher Auflösung. Aus Aufwandsgründen bei sehr hochfrequenten Arrays (7,5 MHz) und technologische Grenzen, weil Elementarwandler sehr schmal werden, z. B. bei der Herstellung, kann bei Arraysystemen die Zahl der Elementarwandler nicht beliebig vergrößert werden. Bei der Herstellung von hochfrequenten Arrays mit Betriebsfrequenzen größer als ca. 7 MHz gibt es technologische Grenzen, weil die Elementarwandler sehr schmal werden. Die Folge ist, daß Gratingkeulen störend in Erscheinung treten. Gratingkeulen entstehen aufgrund der endlich feinen räumlichen Quantisierung durch die Arrayteilung oder, in anderer Interpretation, durch Beugung am Gitterraster der Arrayteilung.

Der Erfindung liegt somit die Aufgabe zugrunde, bei gegebener Arrayteilung die Dynamik der Punktbildfunktion zu erhöhen. Es soll also die Fähigkeit des Geräts zur Erkennung geringer Kontrastunterschiede erhöht werden.

Diese Aufgabe wird erfindungsgemäß dadurch gelöst, daß zusätzlich eine zweite Gruppe von Sende- und/oder Empfangskanälen vorhanden ist, die jeweils mit mehreren Elementarwandlern über Sende- und/oder Empfangsübergabemittel zur Erzeugung eines virtuell zwischen den Elementarwandlern liegenden zentralen Sende- und/oder Empfangsortes gleichzeitig verbindbar sind.

Dadurch werden zusätzlich zu den auf den Wandlern liegenden zentralen Sende- und Empfangsorte virtuell zwischen Elementarwandlern liegende zentrale Sende- und/oder Empfangsorte erzeugt. Die Arrayteilung wir somit virtuell verfeinert bzw. die Elementarwandlerdichte auf dem Array wird scheinbar nahezu verdoppelt. Gratingkeulen treten somit weniger störend in Erscheinung. Die Dynamik der Punktbildfunktion wird erhöht, das Gerät kann geringe Kontrastunterschiede genauer erkennen.

Der größte Gewinn in der Dynamik der Punktbildfunktion wird erreicht, wenn sowohl virtuelle zentrale Sende- als auch virtuelle zentrale Empfangsorte zwischen den Elementarwandlern erzeugt werden. Dies erfordert die annähernde Verdoppelung der Sende- und Empfangskanäle.

Eine aufwandsärmere Lösung ergibt sich, allerdings um den Preis eines geringeren Gewinns in der Dynamik der Punktbildfunktion, wenn entweder nur virtuelle zentrale Sendeorte oder virtuelle zentrale Empfangsorte erzeugt werden. Der Aufwand der Empfangs- bzw. Sendekanäle wird entsprechend verringert.

Eine vorteilhafte Ausführungsform zeichnet sich durch die kennzeichnenden Merkmale des Anspruchs 8 aus. Zur Erzeugung des Sende- und Empfangsorts auf dem zugeordneten Wandler wird jeweils nur dieser Wandler selbst aktiviert, wie es auch im eingangs zitierten Stand der Technik geschieht. Die virtuell zwischen den physikalisch vorhandenen Wandlern liegenden Sende- und Empfangsorte werden jeweils durch gleichzeitige Aktivierung der dazu benachbart liegenden Wandler erzeugt. Im Wechsel werden somit gleichzeitig jeweils ein oder zwei Elementarwandler angesteuert bzw. abgefragt.

Eine weitere vorteilhafte Ausgestaltung zeichnet sich durch die Merkmale des Anspruchs 10 aus. Hier ist der Wechsel der gleichzeitig angesteuerten bzw. abgefragten Elementarwandler auf zwei oder drei ausgedehnt. Ein Ausgleich der unterschiedlichen Empfindlichkeit, die durch die abwechselnde Akivierung von zwei bzw. Elementarwandlern verursacht ist, ist hier weniger nötig als bei der Variante, bei der abwechselnd ein oder zwei Elementarwandler aktiviert werden.

Bei den hier vorgeschlagenen Lösungen kann ein Wandlerarray unverändert mit einer Teilung nach dem heutigen Stand der Technik verwendet werden. Durch die virtuelle Erzeugung einer nahezu doppelt so feinen Arrayteilung wird die Auflösung in der Bilddarstellung deutlich verbessert. Dies stellt eine wesentliche Vereinfachung für die Wandlertechnologie, Kabel und Stecker dar. Ein weiterer Vorteil ist, schon beim Anwender vorhandene Wandlerarrays an Geräte, wie sie hier vorgeschlagen werden, anschließen zu können. In jedem Fall wird ein deutlicher Gewinn an Dynamik der Punktbildfunktion gegenüber einem Gerät mit "kleiner Kanalzahl" erreicht.

Zwei Ausführungsbeispiele der Erfindung werden im folgenden anhand von drei Figuren erläutert. Es zeigen:
- FIG 1: ein Übersichtsbild eines Ultraschallgerätes,
- FIG 2: die Sende- und Empangskanäle zur Erzeugung eines Ultraschallgerätes mit den Elementarwandlern eines anschließbaren Wandlerarrays, bei dem im Wechsel gleichzeitig ein bzw. zwei Elementarwandler angesteuert bzw. abgefragt werden und
- FIG 3: die Sende- und Empfangskanäle zur Erzeugung eines Ultraschallgerätes mit den Elementarwandlern eines anschließbaren Wandlerarrays, bei dem im Wechsel gleichzeitig zwei bzw. drei Elementarwandler angesteuert bzw. abgefragt werden.

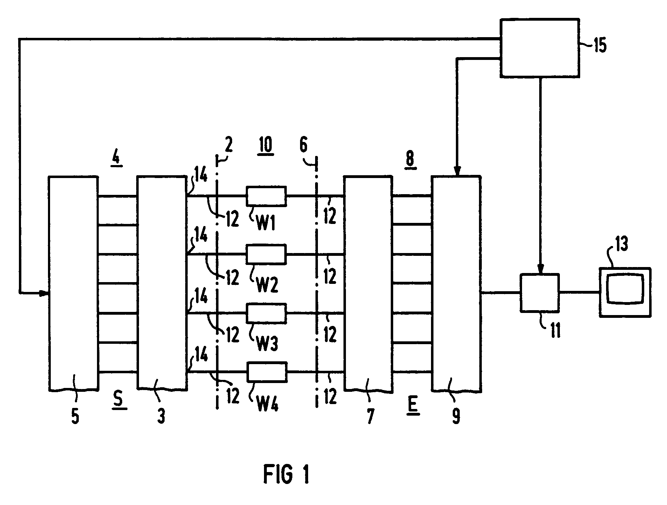

FIG 1 erläutert im allgemeiner Form den Aufbau eines Ultraschallgerätes, in dem die Erfindung verwirklicht ist. Dort ist links von einer strichpunktierten Linie 2 die Sendeseite 4 und rechts von einer strichpunktierten Linie 6 die Empfangsseite 8 des Ultraschallgerätes dargestellt. An die Sende- und Empfangsseite 4 bzw. 8 ist ein Ultraschallapplikator mit einem Wandlerarray 10 anschließbar. Das Wandlerarray 10 besteht aus in Reihe hintereinander angeordneten Elementarwandlern W1, W2, W3... Die Verbindung der Elementarwandler W1, W2, W3... mit dem Ultraschallgerät erfolgt über Anschlußkanäle 12.

Selbstverständlich genügt es, jeden Wandler W1... nur mit einem Anschlußkanal 12 zu verbinden, der dann im Ultraschallgerät sowohl mit der Sendeseite 4 als auch mit der Empfangsseite 8 verbunden ist. Die Anzahl der Anschlußkanäle 12 ist gleich der Anzahl der Elementarwandler W1... in der aktiven Apertur.

Zur Durchführung eines Linearscans besteht die aktive Apertur aus einer Gruppe von Elementarwandlern W1..., die zur Abtastung entlang paraller Abtaststrahlen schrittweise über das Array 10 fortgeschaltet wird. Zur Durchführung eines Sektorscans mit einem in Abtastrichtung konvex gekrümmten Array 10 (curved array) wird ebenfalls eine aktive Apertur, die weniger Wandlerelemente W1... umfaßt als im gesamten Array vorhanden sind, schrittweise fortgeschaltet. Die aktive Apertur kann aber auch alle Wandlerelemente W1... des Array 10 umfassen, die dann zur Durchführung eines elektronischen Sektorscans mit elektronischem Schwenk und/oder elektronischer Fokussierung angesteuert werden.

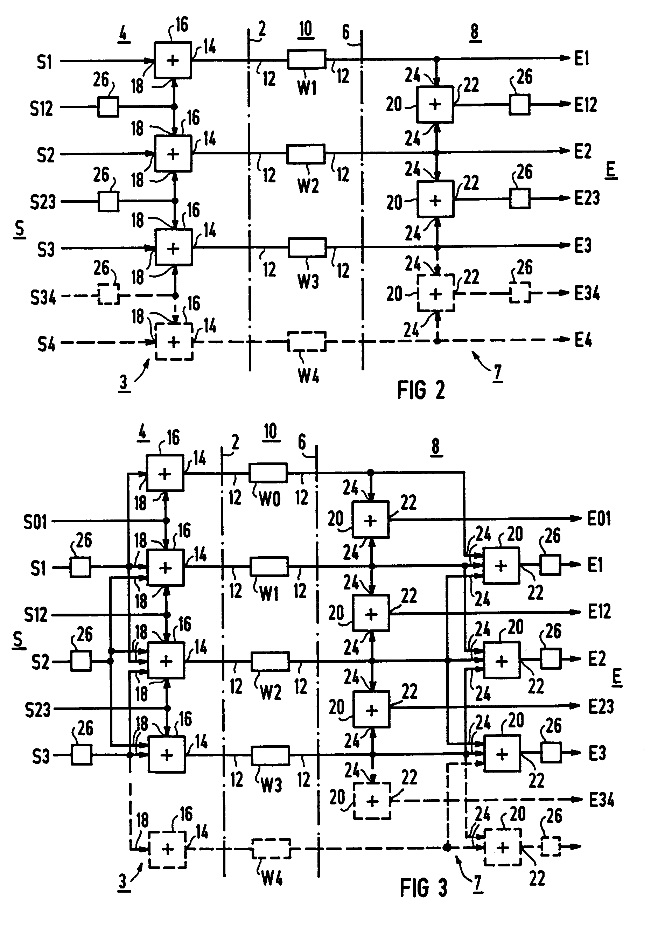

Erfindungsgemäß sind die Anschlußkanäle 12 mit Ausgängen 14 von Sendeübergabemittel 3 verbunden. Eingangsseitig sind die Sendeübergabemittel 3 mit Sendekanälen S verbunden, deren Anzahl nahezu doppelt so groß ist, wie die Anzahl der Anschlußkanäle 12. Die Sendekanäle S leiten Sendeimpulse weiter, die von einem Impulserzeuger 5 erzeugt werden. Der Impulserzeuger kann die Sendeimpulse auf den einzelnen Sendekanälen S gegebenenfalls so gegeneinander verschieben, daß ein elektronischer Schwenk und/oder eine elektronische Fokussierung der Ultraschallabtastung im Untersuchungsgebiet erfolgt. Der Aufbau und die Funktion der Sendeübergabemittel 3 wird weiter unten anhand von FIG 2 und 3 erläutert.

Ähnlich wie die Sendeseite 4 ist die Empfangsseite 8 aufgebaut. Auf der Empfangsseite 8 sind die Anschlußkanäle 12 mit Empfangsübergabemittel 7 verbunden. Ausgangsseitig sind die Empfangsübergabemittel 7 mit Empfangskanälen E verbunden, deren Anzahl nahezu doppelt so groß ist wie die Anzahl der Anschlußkanäle 12 bzw. Wandlerelemente W1... Hier ist die Anzahl der Empfangskanäle E gleich der Anzahl der Sendekanäle S. Der Aufbau und die Funktion der Empfangsübergabemittel 7 wird später anhand von FIG 2 und 3 erläutert.

Die Empfangskanäle E leiten die Echosignale einer Empfangsschaltung 9 zu, die aus den Echosignalen von den Elementarwandlern W1... nach geeigneter Verzögerung ein Empfangssignal bildet. Dieses Empfangssignal ist repräsentativ einer fokussierten Abtastung entlang einer Abtastzeile. Die Verzögerungen können auch so gewählt sein, daß die Abtastzeile einen vorgebbaren Winkel zur Oberfläche des Arrays 10 aufweist, also elektronisch geschwenkt werden. Das Empfangssignal der Empfangsschaltung 9 wird in einer nachfolgenden Signalverarbeitungsschaltung 11 weiter verarbeitet. Dort wird das Signal so aufbereitet, daß es auf einem Bildschirm 13 dargestellt werden kann. Es kann sowohl ein Schnittbild der Untersuchungsfläche, als auch einzeln oder zusätzlich Blutströmungsinformation zur Darstellung gelangen.

Zur Steuerung der Funktionen im Ultraschallgerät ist eine Steuereinheit 15 vorgesehen. Sie steuert sowohl die Vorgänge auf der Sende- und Empfangsseite 4 bzw. 8 als auch die Bilddarstellung.

FIG 2 und 3 zeigen nun im einzelen zwei Ausführungsbeispiele der Sende- und Empfangsübergabemittel 3 bzw. 7. In FIG 2 sind die Sendekanäle S1, S2, S3... und die Empfangskanäle E1, E2, E3... einer ersten Gruppe den Elementarwandlern W1, W2, W3... zugeordnet. Die Zuordnung besteht darin, daß der zentrale Sende- und Empfangsort, also der Ursprung der Hauptenergiestrahlrichtung und der Hauptempfindlichkeitsrichtung auf den Elementarwandlern W1, W2, W3... liegt. In FIG 2 erzeugt somit ein Sendesignal auf dem Sendekanal S1 einen zentralen Sendeort, der auf dem Wandler W1 liegt. Beim Empfang wird im wesentlichen das Empfangssignal, das in der Hauptempfindlichkeitsrichtung auf den Wandler W1 auftrifft, an den Empfangskanal E1 weitergegeben. Somit liegt der zentrale Empfangsort, der dem Empfangskanal E1 zugeordnet ist, auf dem Wandler W1. Die Sende- und Empfangskanäle S2, S3... bzw. E2, E3... sind in gleicher Weise den Elementarwandlern W2, W3... zugeordnet.

Zusätzlich zur ersten Gruppe von Sende- und Empfangskanälen S1, S2... bzw. E1, E2... ist eine zweite Gruppe von Sende- und Empfangskanälen S12, S23, S34... bzw. E12, E23, E34... vorhanden. Die Sende- und Empfangskanäle der zweiten Gruppe S12... bzw. E12... sind jeweils mit benachbarten Elementarwandlern W1 und W2 bzw. W2 und W3... über die Sendeübergabemittel 3 bzw. Empfangsübergabemittel 7 verbunden. Werden mehrere benachbarte Elementarwandler W1, W2... gleichzeitig erregt, so ergibt sich die resultierende Hauptenergiestrahlrichtung aus der Symmetrieachse zu allen Hauptenergiestrahlrichtungen der Einzelwandler W1, W2, usw. Wird eine gerade Anzahl von Elementarwandlern gleichzeitig erregt, so liegt der Urprung der Hauptenergiestrahlrichtung zwischen den Elementarwandlern, es wird so ein virtuell zwischen den Elementarwandlern W1, W2... liegender zentraler Sendeort gebildet.

Analog zum Senden sind die Verhältnisse beim Empfang. Empfangen mehrere benachbarte Elementarwandler W1, W2... gleichzeitig, so ergibt sich die resultierende Hauptempfindlichkeitsrichtung als Symmetrieachse der Hauptempfindlichkeitsrichtungen der einzelnen Wandler W1, W2... Es kann also bei der gleichzeitigen Abfrage von einer geraden Anzahl von Elementarwandlern W1, W2... ein virtuell zwischen den Elementarwandlern W1, W2... liegender zentraler Empfangsort erzeugt werden.

Um die einzelenen Elementarwandler W1, W2,... jeweils sowohl mit den Sendekanälen S1, S2... der ersten Gruppe als auch mit den Sendekanälen S12, S23... der zweiten Gruppe zu verbinden, ist jeweils ein Anschlußkanal 12 mit dem Ausgang 14 eines Sendeaddierers 16 verbunden. Die Sendeaddierer 16, die mit dem randständigen Wandler der Apertur, z. B. W1, verbunden sind, besitzen zwei Eingänge 18, während die übrigen Sendeaddierer 16 drei Eingänge 18 besitzen. Jeder Sendekanal der ersten Gruppe S1, S2... ist mit einem Eingang 18 eines Sendeaddierers 16 verbunden. Dagegen ist jeder Sendekanal der zweiten Gruppe S12, S23... mit jeweils einem Eingang 18 zweier benachbarter Sendeaddierer 16 verbunden.

Auf der Empfangsseite 8 sind Empfangsaddierer 20 vorgesehen, deren Ausgänge 22 jeweils mit den Empfangskanälen der zweiten Gruppe E12, E23... verbunden sind. Jeder Empfangsaddierer 20 besitzt zwei Eingänge 24, die jeweils über die Anschlußkanäle 12 mit zwei benachbarten Elementarwandlern W1, W2... verbindbar sind. Die Empfangskanäle der ersten Gruppe E1, E2... sind über die Anschlußkanäle 12 direkt mit den entsprechenden Elementarwandlern W1, W2... verbindbar.

Angenommen, die aktive Apertur des Wandlerarrays 10 besteht aus n Elementarwandlern W1 bis Wn, dann erzeugen die n Sendekanäle der ersten Gruppe S1 bis Sn und Empfangskanäle E1 bis En n zentrale Sende- bzw. Empfangsorte, die auf den Elementarwandlern W1 bis Wn liegen. Zwischen den Elementarwandlern W1 bis Wn werden virtuell n-1 Sende-und Empfangsorte von n-1 Sende- und Empfangskanäle der zweiten Gruppe S12 bis S(n-1)n bzw. E12 bis E(n-1)n erzeugt. Die insgesamt 2n-1 zentralen Sende- und Empfangsorte werden abwechselnd durch die Aktivierung von einem bzw. zwei Elementarwandlern W1 bis Wn erzeugt. Um nun dadurch hervorgerufene unterschiedliche Empfindlichkeiten zwischen den Sende- und Empfangskanälen auszugleichen, sind in den Sende- und Empfangskanälen der zweiten Gruppe S12... bzw. E12...Amplitudenabschwächer 26 eingefügt, die die Kanäle der ersten und zweiten Gruppe S1... und E1... bzw. S12... und E12... leistungsmäßig angleichen sollen. Es hat sich herausgestellt, daß der Gewichtungsfaktor, mit dem die Amplituden durch die Amplitudenabschwächer 26 gewichtet werden, zwischen 0,5 und 1 liegen kann.

Das Ausführungsbeispiel nach FIG 3 zeigt wiederum ein Ultraschallgerät mit einer Sendeseite 4 und einer Empfangsseite 8, an dem über Anschlußkanäle 12 ein Wandlerarray 10 angeschlossen werden kann. Hier wird ebenfalls wie in FIG 1 eine aktive Apertur aus in Reihe angeordneten Elementarwandlern, die hier jedoch aus Gründen der Anschaulichkeit mit W0, W1, W2, W3... bezeichnet sind, gebildet. Analog zu FIG 2 ist die erste Gruppe von Sende- und Empfangskanälen S1, S2... bzw. E1, E2... jeweils einem Elementarwandler W1, W2... zugeordnet. Jedoch sind hier nicht nur der zugeordnete Elementarwandler sondern zusätzlich benachbarte Elementarwandler jeweils mit den Sende- und Empfangskanälen der ersten Gruppe S1... bzw. E1... verbunden. Auch hier liegt der von jedem einzelnen Sende- und Empfangskanal S1... bzw. E1... bewirkte zentrale Sende- und Empfangsort auf dem zugeordneten Wandler W1, W2...

Zur Erzeugung der virtuell zwischen den physikalisch vorhandenen Elementarwandlern W0, W1... liegenden Sende- und Empfangsorte werden jeweils zwei benachbarte Elementarwandler W0 und W1, W1 und W2 usw. mit jeweils einem Sende- und Empfangskanal der zweiten Gruppe S01, S12,... bzw. E01, E12,... verbunden. Die zweite Gruppe der Sende- und Empfangskanäle S01... bzw. E01 ist also ebenso wie die zweite Gruppe des Ausführungsbeispiels nach FIG 2 mit jeweils mit zwei benachbarten Elementarwandlern W0... verbindbar.

Um mit den Sendekanälen der ersten und zweiten Gruppe S1... bzw. S01... die Elementarwandler W0... entsprechend anzusteuern, sind die Elementarwandler W0... über Ansteuerkanäle 12 mit jeweils einem Ausgang 14 eines Sendeaddierers 16 verbunden. Die Sendeaddierer 16, die mit den randständigen Wandlern der Apertur, z. B. W0, verbunden sind, besitzen zwei Eingänge 18, die benachbarten Sendeaddierer 14 besitzen vier Eingänge 18 und die restlichen Sendeaddierer besitzen fünf Eingänge 18. Die Sendekanäle der ersten Gruppe S1... sind jeweils mit einem Eingang 18 dreier benachbarter Sendeaddierer 16 verbunden. Dagegen sind die Sendekanäle der zweiten Gruppe S01, S12... mit jeweils einem Eingang 18 von zwei benachbarten Sendeaddierern 16 verbunden.

Auf der Empfansseite 8 ist jeder Empfangskanal E1... und E01 mit einem Ausgang 22 eines Empfangsaddierers 20 verbunden. Die Empfangsaddierer 20, die mit den Empfangskanälen der ersten Gruppe E1... verbunden sind, besitzen drei Eingänge 24. Die Empfangsaddierer 20, die mit den Empfangskanälen der zweiten Gruppe E01... verbunden sind, besitzen zwei Eingänge 24. Die Empfangsaddierer sind jeweils mit den Anschlußkanälen 12 benachbarter Elementarwandler W0, W1... verbindbar. So ist z. B. der Empfangsaddierer 20 für den Empfangskanal E01 auf der Eingangsseite mit den Elementarwandlern W01 und W1 verbindbar, während der Empfangsaddierer 20 für den Empfangskanal E1 auf der Eingangsseite mit den Elementarwandlern W0, W1 und W2 verbindbar ist.

Bei dem Ausführungsbeispiel nach FIG 3 sind gleichzeitig immer zwei oder drei Elementarwandler W0, W1... angesteuert bzw. werden abgefragt. Zur Aktivierung von n Elementarwandlern W0, W1... in der aktiven Apertur sind 2n-3 Sende- und Empfangskanäle S1... und S01... bzw. E1... und E01... vorgesehen. Dabei sind n-2 Sende- und Empfangskanäle der ersten Gruppe S1... bzw. E1... den Elementarwandlern W1, W2... zugeordnet. Zur Erzeugung von virtuell zwischen den Wandlerelementen W0, W1... liegenden zentralen Sende- und Empfangsorte sind n-1 Sende- und Empfangskanäle der zweiten Gruppe S01... bzw. E01... vorgesehen.

Zum Ausgleich von Empfindlichkeitsunterschiede, die durch die gleichzeitige Aktivierung von abwechselnd zwei bzw. drei Elementarwandlern hervorgerufen werden, sind in den Sende- und denabschwächer 26 vorgesehen. Es hat sich herausgestellt, daß eine Absenkung der Sende- und Empfangsamplituden auf 0,6 bis 1 des ursprünglichen Wertes vorteilhaft ist.

In den beiden Ausführungsbeispielen nach FIG 2 und 3 liegen die Werte der Verzögerungen der Sende- und Empfangssignale für die virtuell erzeugten Sende- und Empfangsorte zwischen den Werten der Verzögerung für die Sende- und Empfangsorte auf den Elementarwandlern. Mit anderen Worten: Die virtuellen Sende- und Empfangsorte werden zeitlich verschieden zu den auf den Wandlern liegenden Sende- und Empfangsorten bedient. Die Verzögerung für Schwenk und/oder Fokussierung wird also hier wie für ein Wandlerarray mit hoher Elementarwandlerzahl durchgeführt, bei dem die Anzahl der Elementarwandler gleich ist der Anzahl der Sende-und Empfangskanäle.

## Patentansprüche

1. Ultraschallgerät mit einer ersten Gruppe von Sende- und Empfangskanälen (S1... bzw. E1...), die je einem Elementarwandler (W1...) in der aktiven Apertur eines anschließbaren Wandlerarrays (10) zugeordnet sind, wobei der von einem Sendekanal (S1...) erzeugte zentrale Sendeort und der von einem Empfangskanal (E1...) abgefragte zentrale Empfangsort auf dem zugeordneten Elementarwandler (W1...) liegt, **dadurch gekennzeichnet,** daß zusätzlich eine zweite Gruppe von Sende- und/oder Empfangskanälen (S01, S12... bzw. E01, E12...) vorhanden ist, die jeweils mit mehreren Elementarwandlern (W0, W1, W2...) über Sende- und/oder Empfangsübergabemittel (3, 16 bzw. 7, 20) zur Erzeugung eines virtuell zwischen den Elementarwandlern (W0, W1, W2...) liegenden zentralen Sende- und/oder Empfangsortes gleichzeitig verbindbar sind.

2. Ultraschallgerät nach Anspruch 1, **dadurch gekennzeichnet,** daß die Sende- und/oder Empfangskanäle (S01, S12,... bzw. E01, E12...) der zweiten Gruppe jeweils mit zum virtuellen Sende- und/oder Empfangsort symmetrisch angeordneten Elementarwandlern (W0, W1, W2...) über die Sende und/oder Empfangsübergabemittel (16 bzw. 20) verbindbar sind.

3. Ultraschallgerät nach Anspruch 2, **dadurch gekennzeichnet,** daß die Sende- und/oder Empfangskanäle (S01, S12,... bzw. E01, E12,...) der zweiten Gruppe jeweils mit zum virtuellen Sende- und/oder Empfangsort benachbarten Elementarwandlern (W0, W1, W2,...) verbindbar sind.

4. Ultraschallgerät nach einem der Ansprüche 1 bis 3, **dadurch gekennzeichnet,** daß die Sende- und/oder Empfangskanäle (S1.. bzw. E1...) der ersten Gruppe jeweils mit dem zugeordneten Wandler (W1...) verbindbar sind.

5. Ultraschallgerät nach einem der Ansprüche 1 bis 3, **dadurch gekennzeichnet,** daß über die Sende- und/oder Empfangsübergabemittel (16 bzw. 20) die Sende- und/oder Empfangskanäle (S1... bzw. E1...) der ersten Gruppe jeweils mit dem zugeordneten und symmetrisch dazu angeordneten Elementarwandlern (W0, W1, W2...) verbindbar sind.

6. Ultraschallgerät nach Anspruch 5, **dadurch gekennzeichnet,** daß die Sende- und/oder Empfangskanäle (S1... bzw. E1...) der ersten Gruppe jeweils mit dem zugeordneten und den benachbarten Elementarwandlern (W0, W1, W2,...) über die Sende- und/oder Empfangsübergabemittel (3, 16 bzw. 7, 20) verbindbar sind.

7. Ultraschallgerät nach einem der Ansprüch 1 bis 6, **dadurch gekennzeichnet,** daß alle Sende- und/oder Empfangsübergabemittel (16 bzw 20) Sende- bzw. Empfangsaddierer sind.

8. Ultraschallgerät nach Anspruch 4 und 7, **dadurch gekennzeichnet,** daß die Elementarwandler (W1...) der Apertur mit jeweils einem Ausgang (14) eines Sendeaddierers (16) verbindbar sind, daß die Sendeaddierer (16) für die in der Apertur außenliegenden Elementarwandler (z.B W1) zwei Eingänge (18) und für die übrigen Elementarwandler (z.B. W2) drei Eingänge (18) aufweisen, daß jeweils die Sendekanäle (S1...) der ersten Gruppe mit einem Eingang (14) eines Sendeaddierers (16) verbunden sind, daß die Sendekanäle (S12...) der zweiten Gruppe mit jeweils einen Eingang (14) zweier benachbarter Sendeaddierer (16) verbunden sind, daß die Elementarwandler W1... der Apertur mit jeweils den Empfangskanälen (E1...) der ersten Gruppe verbindbar sind, daß Empfangsaddierer (20) vorhanden sind, deren Ausgänge (22) mit jeweils einem Empfangskanal (E12...) der zweiten Gruppe verbunden sind und daß die Empfangsaddierer (20) zwei Eingänge (24) besitzen, die jeweils mit benachbarten Elementarwandlern (W1, W2,..) angeordnet sind.

9. Ultraschallgerät nach Anspruch 8, **dadurch gekennzeichnet,** daß zwischen den Sendekanälen der der zweiten Gruppe (S12, S23...) und den dazugehörigen Sendeaddierern (16) und zwischen den Empfangskanälen der zweiten Gruppe (E12, E23...) und den dazugehörigen Empfangsaddierer (20) Amplitudenabschwächer (26) angeordnet sind.

10. Ultraschallgerät nach Anspruch 5 und 7, **dadurch gekennzeichnet,** daß die Elementarwandler (W0, W1...) der Apertur mit jeweils einem Ausgang (14) eines Sendeaddierers (16) verbindbar sind, daß die Sendeaddierer (16) für die in der Apertur außenliegenden Elementarwandler (z.B. W0) zwei Eingänge (18) aufweisen, daß die Sendeaddierer (16) für die neben den außenliegenden Elementarwandlern (z.B. W0) angeordneten Elementarwandler (z.B. W1) vier Eingänge (18) aufweisen, daß die übrigen Sendeaddierer (16) fünf Eingänge (18) aufweisen, daß jeweils die Sendekanläle (S1...) der ersten Gruppe mit den Eingängen (18) von drei benachbarten Sendeaddierern (16) verbunden sind, daß die Sendekanäle (S01...) der zweiten Gruppe mit den Eingängen von jeweils zwei benachbarten Sendeaddierern (16) verbunden sind, daß jeder Empfangskanal (E01, E1, E12, Es...) mit dem Ausgang eines Empfangsaddierers (20) verbunden ist, daß die Empfangsaddierer (20), die mit der ersten Gruppe von Empfangskanäle (E1...) verbunden sind, drei Eingänge (24) aufweisen, daß die Empfangsaddierer (20), die mit der zweiten Gruppe von Empfangskanälen (E01...) verbunden sind, zwei Eingänge (24) aufweisen und daß jeweils die Eingänge (24) mit benachbarten Elementarwandlern (W0, W1...) verbindbar sind.

11. Ultraschallgerät nach Anspruch 10, **dadurch gekennzeichnet,** daß zwischen den Sendekanälen der ersten Gruppe (S1, S2...) und den dazugehörigen Sendeaddierer (16) und zwischen den Empfangskanälen (E1, E2...) und den dazugehörigen Empfangsaddierern (20) Amplitudenschwächer (26) angeordnet sind.

## Claims

1. Ultrasonic device with a first group of transmission and reception channels (S1... and E1...) which are in each case associated with an elementary transducer (W1...) in the active aperture of a connectable transducer array (10), whereby the central transmission site produced by a transmission channel (S1...) and the central reception site scanned by a reception channel (E1...) lie on the associated elementary transducer (W1...), characterized in that in addition a second group of transmission and/or reception channels (S01, S12... and E01, E12...) is present which can be simultaneously connected in each case to several elementary transducers (W0, W1, W2...) by way of transmission and/or reception transfer means (3, 16 and 7, 20) for the production of a central transmission and/or reception site lying virtually between the elementary transducers (W0, W1, W2...).

2. Ultrasonic device according to claim 1, characterized in that the transmission and/or reception channels (S01, S12,... and E01, E12...) of the second group can in each case be connected to elementary transducers (W0, W1, W2...) arranged symmetrically to the virtual transmission and/or reception site by way of the transmission and/or reception transfer means (16 and 20).

3. Ultrasonic device according to claim 2, characterized in that the transmission and/or reception channels (S01, S12,... and E01, E12,...) of the second group can in each case be connected to elementary transducers (W0, W1, W2,...) adjacent to the virtual transmission and/or reception site.

4. Ultrasonic device according to one of claims 1 to 3, characterized in that the transmission and/or reception channels (S1.. and E1...) of the first group can in each case be connected to the associated transducer (W1...).

5. Ultrasonic device according to one of claims 1 to 3, characterized in that by means of the transmission and/or reception transfer means (16 and 20) the transmission and/or reception channels (S1... and E1...) of the first group can in each case be connected to the associated elementary transducers (W0, W1, W2...) arranged symmetrically thereto.

6. Ultrasonic device according to claim 5, characterized in that the transmission and/or reception channels (S1... and E1...) of the first group can in each case be connected to the associated and the adjacent elementary transducers (W0, W1, W2,...) by way of the transmission and/or reception transfer means (3, 16 and 7, 20).

7. Ultrasonic device according to one of claims 1 to 6, characterized in that all transmission and/or reception transfer means (16 and 20) are transmission and reception adders.

8. Ultrasonic device according to claim 4 and 7, characterized in that the elementary transducers (W1...) of the aperture can in each case be connected to an output (14) of a transmission adder (16), in that the transmission adders (16) for the outerlying elementary transducers (e.g. W1) in the aperture have two inputs (18) and for the remaining elementary transducers (e.g. W2) have three inputs (18), in that in each case the transmission channels (S1...) of the first group are connected to an input (14) of a transmission adder (16), in that the transmission channels (S12...) of the second group are in each case connected to one input (14) of two adjacent transmission adders (16), in that the elementary transducers W1... of the aperture can be connected in each case to the reception channels (E1...) of the first group, in that reception adders (20) are present, the outputs (22) of which are connected in each case to a reception channel (E12...) of the second group and in that the reception adders (20) have two inputs (24) which are in each case arranged with adjacent elementary transducers (W1, W2,..).

9. Ultrasonic device according to claim 8, characterized in that amplitude attenuators (26) are arranged between the transmission channels of the second group (S12, S23...) and the appertaining transmission adders (16) and between the reception channels of the second group (E12, E23...) and the appertaining reception adders (20).

10. Ultrasonic device according to claim 5 and 7, characterized in that the elementary transducers (W0, W1...) of the aperture can in each case be connected to an output (14) of a transmission adder (16), in that the transmission adders (16) for the outerlying elementary transducers (e.g. W0) in the aperture have two inputs (18), in that the transmission adders (16) for the elementary transducers (e.g. W1) arranged next to the outerlying elementary transducers (e.g. W0) have four inputs (18), in that the remaining transmission adders (16) have five inputs (18), in that in each case the transmission channels (S1...) of the first group are connected to the inputs (18) of three adjacent transmission adders (16), in that the transmission channels (S01...) of the second group are connected to the inputs of in each case two adjacent transmission adders (16), in that each reception channel (E01, E1, E12, Es...) is connected to the output of a reception adder (20), in that the reception adders (20) which are connected to the first group of reception channels (E1...) have three inputs (24), in that the reception adders (20) which are connected to the second group of reception channels (E01...) have two inputs (24) and in that in each case the inputs (24) can be connected to adjacent elementary transducers (W0, W1...).

11. Ultrasonic device according to claim 10, characterized in that amplitude attenuators (26) are arranged between the transmission channels of the first group (S1, S2...) and the appertaining transmission adders (16) and between the reception channels (E1, E2...) and the appertaining reception adders (20).

## Revendications

1. Appareil à ultrasons comportant un premier groupe de canaux d'émission et de réception (S1... ou E1...), qui sont associés respectivement à un transducteur élémentaire (W1...) dont l'ouverture active un réseau de transducteurs (10) pouvant être raccordés, et dans lequel un emplacement central d'émission produit par un canal d'émission (S1...), et l'emplacement central de réception, interrogé par un canal de réception (E1...), sont situés sur le transducteur élémentaire associé (W1...), caractérisé par le fait qu'il est prévu en outre un second groupe de canaux d'émission et/ou de réception (S01, S12... ou E01, E12...), qui peuvent respectivement être raccordés simultanément à plusieurs transducteurs élémentaires (W0, W1, W2...) par l'intermédiaire de moyens de transfert d'émission et/ou de réception (3, 16 ou 7, 20) pour la production d'un emplacement central d'émission et/ou de réception, situé virtuellement entre les éléments transducteurs (W0, W1, W2...).

2. Appareil à ultrasons suivant la revendication 1, caractérisé par le fait que les canaux d'émission et/ou de réception (S01, S12, ... ou E01, E12...) du second groupe peuvent respectivement être raccordés à des éléments transducteurs (W0, W1, W2...), disposés symétriquement à l'emplacement virtuel d'émission et/ou de réception, par l'intermédiaire des moyens de transfert d'émission et/ou de réception (16 ou 20).

3. Appareil à ultrasons suivant la revendication 2, caractérisé par le fait que les canaux d'émission et/ou de réception (S01, S12, ... ou E01, E12, ...) du second groupe peuvent être raccordés respectivement à des transducteurs élémentaires (W0,W1,W2,...) voisins de l'emplacement virtuel d'émission et/ou de réception.

4. Appareil à ultrasons suivant l'une des revendications 1 à 3, caractérisé par le fait que les canaux d'émission et/ou de réception (S1... ou E1...) du premier groupe peuvent être raccordés respectivement au transducteur associé (W1...).

5. Appareil à ultrasons suivant l'une des revendications 1 à 3, caractérisé par le fait que les canaux d'émission et/ou de réception (S1... ou E1...) du premier groupe peuvent être raccordés, par l'intermédiaire des moyens de transfert d'émission et/ou de réception (16 ou 20), respectivement au transducteur élémentaire associé et à des transducteurs élémentaires (W0, W1, W2, ...) disposés symétriquement par rapport à ce transducteur.

6. Appareil à ultrasons suivant la revendication 5, caractérisé par le fait que les canaux d'émission et/ou de réception (S1... ou E1...) du premier groupe peuvent être raccordés respectivement au transducteur élémentaire associé et aux transducteurs élémentaires voisins (W0, W1, W2, ...), par l'intermédiaire des moyens de transfert d'émission et/ou de réception (3, 16 ou 7, 20).

7. Appareil à ultrasons suivant l'une des revendications 1 à 6, caractérisé par le fait que tous les moyens de transfert d'émission et/ou de réception (16 ou 20) sont des additionneurs d'émission ou de réception.

8. Appareil à ultrasons suivant la revendication 4 et 7, caractérisé par le fait que les transducteurs élémentaires (W1...) de l'ouverture peuvent être raccordés respectivement à une sortie (14) dans l'additionneur d'émission (16), que les additionneurs d'émission (16) possèdent, pour les transducteurs élémentaires (par exemple W1) qui sont situés à l'extérieur dans l'ouverture, deux entrées (18) et, pour les autres transducteurs élémentaires (par exemple W2), trois entrées (18), les canaux d'émission (S1...) du premier groupe sont respectivement raccordés à une entrée (14) d'un additionneur d'émission (16), que les canaux d'émission (S12...) du second groupe sont raccordés à respectivement une entrée (14) de deux additionneurs d'émission voisins (16), que les transducteurs élémentaires (W1...) de l'ouverture peuvent être raccordés respectivement aux canaux de réception (E1...) du premier groupe, qu'il est prévu des additionneurs de réception (20), dont les sorties (22) sont raccordées respectivement à un canal de réception (E12...) du second groupe et que les additionneurs de réception (20) possèdent deux entrées (24), qui sont raccordées respectivement à des transducteurs élémentaires voisins (W1, W2, ...).

9. Appareil à ultrasons suivant la revendication 8, caractérisé par le fait que des atténuateurs d'amplitude (26) sont disposés entre les canaux d'émission du second groupe (S12, S23...) et les additionneurs d'émission (16), qui leur sont associés, et entre les canaux de réception du second groupe (E12, E23...) et les additionneurs de réception (E20), qui leur sont associés.

10. Appareil à ultrasons suivant les revendications 5 et 7, caractérisé par le fait que les transducteurs élémentaires (W0, W1...) de l'ouverture peuvent être raccordés respectivement à une sortie d'un additionneur d'émission (16), que les additionneurs d'émission (16), pour les transducteurs élémentaires (par exemple WO) qui se trouvent aux extrémités dans l'ouverture, possèdent deux entrées (18), que les additionneurs d'émission (16) pour les transducteurs élémentaires (par exemple W1), disposés à côté des transducteurs élémentaires extérieurs (par exemple W0), possèdent quatre entrées (18), que les autres additionneurs d'émission (16) comportent cinq entrées (18), que respectivement les canaux d'émission (S1...) du premier groupe sont reliés aux entrées (18) de trois additionneurs d'émission voisins (16), que les canaux d'émission (S01...) du second groupe sont raccordés aux entrées de respectivement deux additionneurs d'émission voisins (16), que chaque canal de réception (E01, E1, E12, Es...) est raccordé à la sortie d'un additionneur de réception (20), que les additionneurs de réception (20), qui sont raccordés au premier groupe de canaux de réception (E1...), possèdent trois entrées (24), que les additionneurs de réception (20), qui sont reliés au second groupe de canaux de réception (E01...), comportent deux entrées (24) et que respectivement les entrées (24) peuvent être raccordées à des transducteurs élémentaires voisins (W0, W1, ...).

11. Appareil à ultrasons suivant la revendication 10, caractérisé par le fait que des atténuateurs d'amplitude (26) sont disposés entre les canaux d'émission du premier groupe (S1, S2...) et les additionneurs d'émission (16), qui leur sont associés, et entre les canaux de réception (E1, E2...) et les additionneurs de réception (20), qui leur sont associés.
